# EUROPEAN PATENT SPECIFICATION

(11) **EP 3 232 132 B1**
(45) Date of publication and mention of the grant of the patent: **24.04.2019**
(21) Application number: 16865275.8
(22) Date of filing: 01.03.2016
(51) Int. Cl.: F24F 11/30, F24F 11/62

(54) **AIR CONDITIONING SYSTEM**
KLIMATISIERUNGSSYSTEM
SYSTÈME DE CLIMATISATION

(43) Date of publication of application: 18.10.2017
(73) Proprietor: MITSUBISHI ELECTRIC CORPORATION, Chiyoda-ku Tokyo 100-8310 (JP)
(72) Inventor: KOIZUMI, Yoshiaki, Tokyo 100-8310 (JP); KOJIMA, Yoshihisa, Tokyo 100-8310 (JP); MURAMATSU, Hidetoshi, Tokyo 102-0073 (JP)
(74) Representative: Pfenning, Meinig & Partner mbB
(86) International application number: PCT/JP2016/056266
(87) International publication number: WO 2017/149660

(56) References cited:
- EP-A1- 2 950 010
- EP-A2- 2 351 971
- GB-A- 2 513 945
- JP-A- 2001 248 876
- JP-A- 2005 016 862
- JP-A- 2009 014 233
- JP-A- 2009 014 233
- JP-A- 2015 172 467
- JP-A- 2015 197 241

## Description

### Technical Field

The present invention relates to an air-conditioning system, and in particular to an air-conditioning system in which an air-conditioning apparatus and a controller communicate with each other by a first communication method, and the controller and a terminal, different from the controller, communicate with each other by a second communication method.

### Background Art

Patent Literature 1 discloses an air-conditioning system according to the preamble of claim 1.

Some of conventional air-conditioning systems include a controller connected to an air-conditioning apparatus via a wiring, and configured to store data such as operation history and failure code and transmit the data to, for example, a terminal such as a mobile phone (see, for example, Patent Literature 1). With the technique according to Patent Literature 1, the data is transmitted to a service store from the terminal, for example the mobile phone, so that the service store can decide whether the air-conditioning apparatus has to undergo an inspection.

Patent Literature 2 describes an air-conditioning apparatus comprising a controller that controls air conditioning equipment on the basis of a set temperature and a sensible temperature. The sensible temperature is computed depending on indoor temperature, indoor humidity, radiation temperature and heat dissipation ratio data.

Patent Literature 3 discloses an air-conditioning monitoring system including an air conditioner, a centralized monitoring apparatus and a communication terminal. the air-conditioner comprises an outdoor unit and a plurality of indoor units and a remote controller for operating the indoor units. The air conditioner shifts to a normal operation after execution of a test operation.

### Citation List

### Patent Literature

Patent Literature 1: Japanese Unexamined Patent Application Publication No. 2009-14233
Patent Literature 2: GB 2 513 945 A1
Patent Literature 3: EP 2 351 971 A2

### Summary of Invention

### Technical Problem

With the conventional air-conditioning systems, whether the air-conditioning apparatus has to undergo an inspection can be roughly determined on the basis of the operation history and the failure code. However, the conventional air-conditioning systems are unable to recognize, for example, that a part of the space to be air-conditioned is not sufficiently cooled, or the temperature is uneven in the space to be air-conditioned.

The present invention has been made in view of the foregoing situation, and an object of the present invention is to provide an air-conditioning system that enables more precise decision to be made regarding whether the air-conditioning apparatus has to undergo an inspection.

### Solution to Problem

In one embodiment, the present invention provides an air-conditioning system including an air-conditioning apparatus including an outdoor unit and an indoor unit having a radiation temperature sensor configured to detect radiation temperature in a space to be air-conditioned; a controller configured to communicate with the indoor unit and acquire detection data from the radiation temperature sensor; and a terminal configured to communicate with the controller and acquire the detection data from the controller, the terminal being configured to detect a change in detection data and output the change.

### Advantageous Effects of Invention

With the air-conditioning system configured as above, it can be more precisely decided whether the air-conditioning apparatus has to undergo an inspection.

### Brief Description of Drawings

Fig. 1A is a schematic diagram showing a configuration of an air-conditioning system according to Embodiment of the present invention.
Fig. 1B is a schematic diagram showing a refrigerant circuit configuration of an air-conditioning apparatus in the air-conditioning system according to Embodiment of the present invention.
Fig. 1C is a functional block diagram of the air-conditioning system according to Embodiment of the present invention.
Fig. 2 is a grid square map generated by the air-conditioning system according to Embodiment of the present invention.
Fig. 3 is a sequence chart showing an operation of the air-conditioning system according to Embodiment of the present invention.
Fig. 4 is a sequence chart showing a variation of the operation of the air-conditioning system according to Embodiment of the present invention.

### Description of Embodiments

### Embodiment

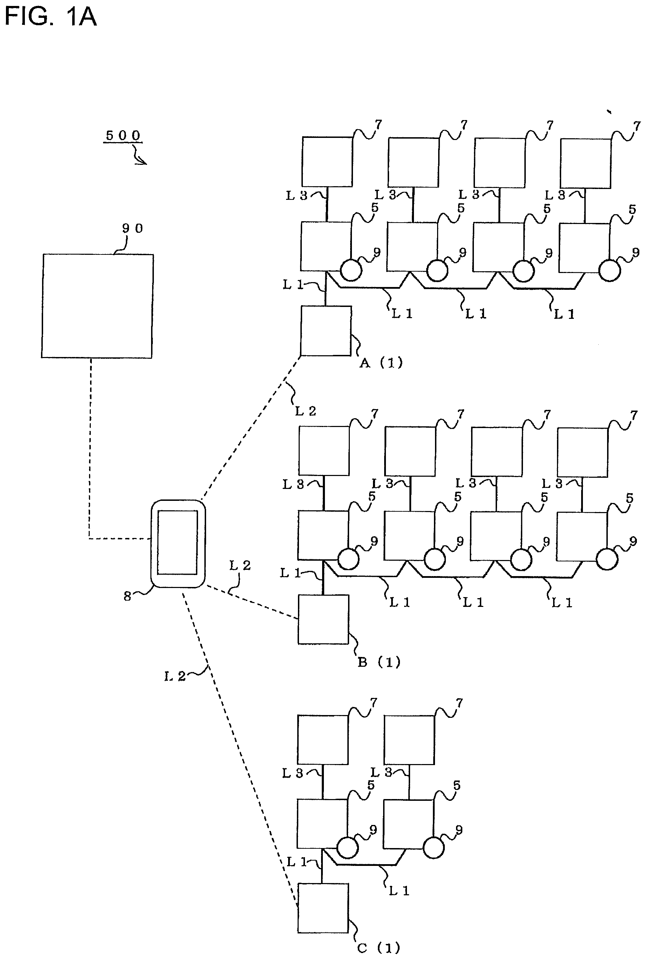

Fig. 1A is a schematic diagram showing a configuration of an air-conditioning system 500 according to Embodiment of the present invention.

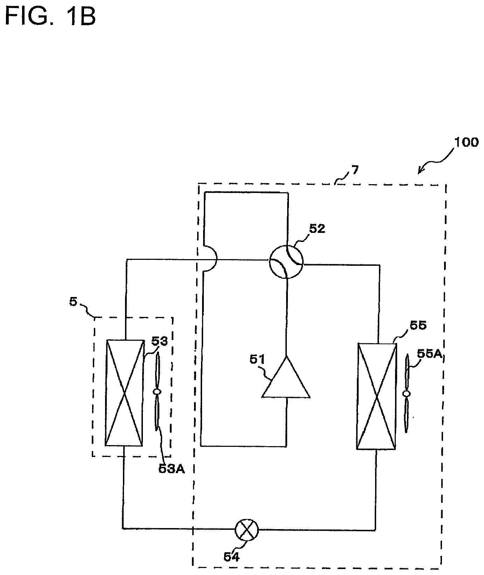

Fig. 1B is a schematic diagram showing a refrigerant circuit configuration of an air-conditioning apparatus 100 in the air-conditioning system 500 according to Embodiment of the present invention.

### [Configuration of Air-Conditioning System 500]

As shown in Fig. 1A, the air-conditioning system 500 includes an air-conditioning apparatus 100, a controller 1, and a terminal 8. A service store 90 may also be included in the air-conditioning system 500. In Embodiment, the terminal 8 is exemplified by a mobile phone. However, the terminal 8 is not limited to the mobile phone but may be other devices such as a personal computer (PC).

The air-conditioning apparatus 100 includes an outdoor unit 7, and an indoor unit 5 including a radiation temperature sensor 9 that detects radiation temperature of a space to be air-conditioned. The controller 1 communicates with the indoor unit 5 and acquires (receives) detection data from the radiation temperature sensor 9. The terminal 8 communicates with the controller 1, and acquires (receives) the detection data from the controller 1. Here, the detection data refers to data of the radiation temperature in the space to be air-conditioned. The terminal 8 generates image data representing temperature distribution in the space to be air-conditioned, according to the detection data.

The controller 1 includes a main controller A, a sub controller B, and a sub controller C. The controller 1 may be constituted, for example, of a remote controller. In Embodiment, the controller 1 is communicably connected to four indoor units 5. The sub controller B is also connected to four indoor units 5 so as to be able to communicate with each other. The sub controller C is connected to two indoor units 5 so as to be able to communicate with each other.

The indoor units 5 communicate with each other by a first communication method. The indoor units 5 also communicate with the controller 1 by the first communication method. The indoor units 5 are connected to each other via a wiring L1. The indoor units 5 are also connected to the controller 1 via the wiring L1. The wiring L1 may be, for example, a dedicated line communicating between the indoor units 5 and the controller 1. The operating power of the controller 1 is supplied from the indoor unit 5.

The controller 1 and the terminal 8 communicate with each other by the second communication method, via wireless communication L2. A short-range wireless communication may be adopted as the second communication method. Employing the short-range wireless communication allows reduction of the power supply from the indoor unit 5 to the controller 1.

The outdoor unit 7 and the indoor unit 5 communicate with each other by a third communication method. The outdoor unit 7 and the indoor unit 5 are connected to each other via a wiring L3. The wiring L3 may either include an AC power line and a communication line, or a dedicated line. Although the former configuration is easier to install compared with the latter, the former configuration has a shorter communication range and a slower communication rate than the latter. Accordingly, at most approximately four indoor units 5 can be connected to one outdoor unit 7. In Embodiment, the wiring L3 is composed of the AC power line and one communication line. Embodiment represents, as an example, the case where four indoor units 5 are connected to the outdoor unit 7.

When the service store 90 is included in the air-conditioning system 500, the terminal 8 and the service store 90 communicate with each other by a fourth communication method, either via wireless or wired communication.

The indoor unit 5 includes the radiation temperature sensor 9 that detects the radiation temperature in the space to be air-conditioned. The indoor unit 5 transmits the detection data of the radiation temperature sensor 9 to the controller 1. The indoor unit 5 also receives data related to operation instructions for the air-conditioning apparatus 100 from the controller 1.

The radiation temperature sensor 9 detects the temperature of a human and the floor. Each of the indoor units 5 transmits the detection data of the radiation temperature sensor 9 to the controller 1 by the first communication method. The controller 1 transmits the detection data of the radiation temperature sensor 9 to the terminal 8 by the second communication method. The terminal 8 receives the detection data, and detects a change in detection data. Upon detecting the change in detection data, the terminal 8 outputs the content of the detected change. In Embodiment, the term "output" refers to displaying image data of temperature distribution in the space to be air-conditioned, on a display unit 20 of the terminal 8. However, the outputting may be performed in different forms, such as turning on a caution lamp provided on the terminal 8 upon detecting a change in detection data. Alternatively, the terminal 8 may output verbal notification upon detecting a change in detection data.

The detection data is transmitted to the controller 1 after the radiation temperature sensor 9 rotates 360 degrees. When the radiation temperature sensor 9 rotates 360 degrees next time, the detection data is again transmitted to the controller 1. The transmitted data is composed of values (array) read by the radiation temperature sensor 9. The controller 1 transmits the array data to the terminal 8. Here, the user can select whether to transmit the array data to the terminal 8, by giving or cancelling the transmission permission to the controller 1.

The controller 1 can transmit the data related to the operation instructions for the air-conditioning apparatus 100, to the indoor unit 5. The controller 1 can also receive the detection data of the space to be air-conditioned, from the indoor unit 5. In addition, the controller 1 can transmit the detection data of the space to be air-conditioned to the terminal 8. The controller 1 can also receive the data related to the operation instructions, from the terminal 8.

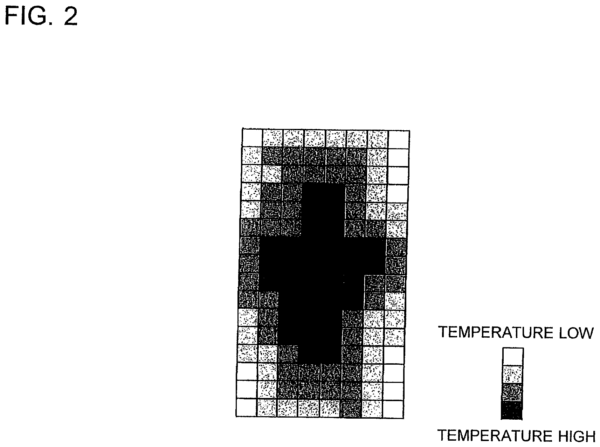

The terminal 8 can transmit the data related to the operation instructions for the air-conditioning apparatus 100, to the controller 1. The terminal 8 can also receive the detection data of the space to be air-conditioned, from the controller 1. The terminal 8 is configured to detect a change in detection data of the space to be air-conditioned received from the controller 1. The terminal 8 can also display a grid square map (image data) representing the temperature distribution in the space to be air-conditioned, according to the detection data of the space to be air-conditioned received from the controller 1 (see Fig. 2).

### [Refrigerant Circuit Configuration of Air-Conditioning Apparatus 100]

Referring to Fig. 1B, the air-conditioning apparatus 100 includes the indoor unit 5 and the outdoor unit 7. The air-conditioning apparatus 100 includes a compressor 51 that compresses refrigerant, and a flow switching valve 52 that switches the flow path of the refrigerant. The air-conditioning apparatus 100 also includes an indoor heat exchanger 53 that serves as an evaporator or a condenser, an outdoor heat exchanger 55 that serves as a condenser or an evaporator, an indoor fan 53A that supplies air to the indoor heat exchanger 53, and an outdoor fan 55A that supplies air to the outdoor heat exchanger 55. Further, the air-conditioning apparatus 100 includes an expansion device 54 that depressurizes the refrigerant.

The indoor unit 5 includes the indoor heat exchanger 53 and the indoor fan 53A. The outdoor unit 7 includes the compressor 51, the flow switching valve 52, the outdoor heat exchanger 55, the expansion device 54, and the outdoor fan 55A. The air-conditioning apparatus 100 can switch between a cooling operation and a heating operation, by switching the flow switching valve 52. Fig. 1B illustrates a setting for the heating operation.

### [Functions of Air-Conditioning System 500]

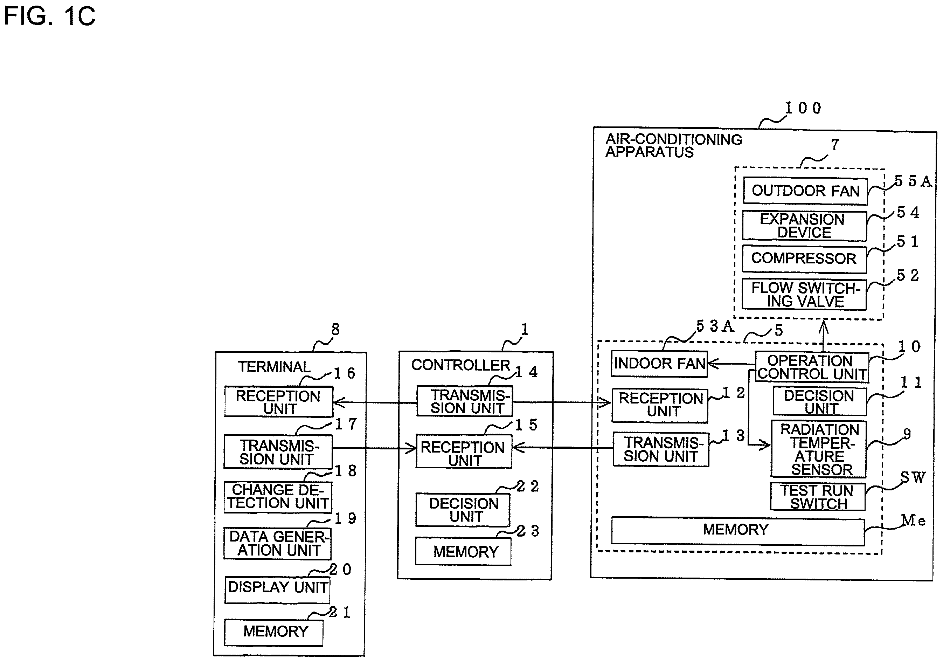

Fig. 1C is a functional block diagram of the air-conditioning system 500 according to Embodiment.

Fig. 2 is a grid square map generated by the air-conditioning system 500 according to Embodiment.

Referring to Fig. 1C and Fig. 2, the function of the air-conditioning apparatus 100, and the functions of the controller 1 and the terminal 8 will be described hereunder.

### (Air-Conditioning Apparatus 100)

The indoor unit 5 of the air-conditioning apparatus 100 includes an operation control unit 10, a determination unit 11, a test run switch SW, a memory Me, a reception unit 12, and a transmission unit 13.

The operation control unit 10 controls the actuators according to results of determination of the determination unit 11 and the data related to operation instructions transmitted from the controller 1. The operation control unit 10 controls, for example, the rotation speed of the outdoor fan 55A and the indoor fan 53A, the opening degree of the expansion device 54, the frequency of the compressor 51, and the switching of the flow switching valve 52. In addition, the operation control unit 10 controls the actuators so as to perform predetermined actions, when the determination unit 11 determines that the test run switch SW has been pressed.

The determination unit 11 determines whether or not a part of the space to be air-conditioned is cooled or heated, for example according to the detection data of the radiation temperature sensor 9. The determination unit 11 also decides whether the test run switch SW is pressed.

The test run switch SW is attached, for example, to the indoor unit 5. When a service person presses the test run switch SW, the air-conditioning apparatus 100 performs a predetermined operation. Examples of the predetermined operation includes an air-sending operation in which only the indoor fan 53A is activated, and the cooling operation or the heating operation in which the compressor 51, the indoor fan 53A, the outdoor fan 55A, the expansion device 54, and the flow switching valve 52 are activated.

The memory Me stores therein various types of data. The memory Me stores, for example, the detection data from the radiation temperature sensor 9. In addition, the memory Me can store operation data of the air-conditioning apparatus 100 such as a target temperature, data indicating the model of the air-conditioning apparatus 100, operation data of the air-conditioning apparatus 100 such as the duration of the operation, and the power consumption and rotation speed of the compressor 51 of the outdoor unit 7, the code indicating the cause of failure of the air-conditioning apparatus 100, and data of outside temperature.

The reception unit 12 receives the data from the controller 1. The transmission unit 13 transmits the data to the controller 1.

### (Controller 1)

The controller 1 outputs, upon being operated by the user, the instruction for the cooling or heating operation to the air-conditioning apparatus 100. The controller 1 stores a plurality of pieces of detection data, out of which the controller 1 transmits the detection data according to a request from the terminal 8.

The controller 1 includes a transmission unit 14 that transmits the data to the reception unit 12 of the air-conditioning apparatus 100, and a reception unit 15 that receives the data from the transmission unit 13 of the air-conditioning apparatus 100. The controller 1 also includes a determination unit 22 that decides whether a test run operation instruction has been received from the terminal 8, and a memory 23 that stores various types of data. Here, the transmission unit 14 of the controller 1 can also transmit the data to the terminal 8, and the reception unit 15 can also receive the data from the terminal 8.

Upon receipt of the operation instruction from the terminal 8, the controller 1 transmits the detection data received from the indoor unit 5 in advance of the test run to the terminal 8, and then causes the air-conditioning apparatus 100 to perform the test run. When the air-conditioning apparatus 100 performs the test run, the controller 1 acquires the detection data after the test run, from the indoor unit 5. Further, the controller 1 transmits the detection data acquired from the indoor unit 5 after the test run, to the terminal 8. Here, the terminal 8 detects a change between the detection data before the test run and the detection data after the test run, and outputs the change.

### (Terminal 8)

The terminal 8 includes a reception unit 16 that receives the data from the controller 1, and a transmission unit 17 that transmits the data to the controller 1. The terminal 8 also includes a change detection unit 18 that detects a change in the detection data transmitted from the controller 1, and a data generation unit 19 that generates a grid square map according to the detection data received through the reception unit 16. The terminal 8 may be exemplified by a mobile phone (portable terminal) such as a smartphone, which includes a display unit 20. The terminal 8 also includes a memory 21 that stores various types of data.

The terminal 8 receives, upon being operated by a service person, the instruction to cause the air-conditioning apparatus 100 to start the test run, and transmits the instruction data to the air-conditioning apparatus 100 through the controller 1.

The change detection unit 18 is configured to detect whether a change has taken place, through comparison of the detection data sequentially acquired. The change detection unit 18 detects whether the air-conditioning apparatus 100 is normally operating, on the basis of a difference in the detection data from the radiation temperature sensor 9, or deviation of the differences in the detection data.

The data generation unit 19 is configured to generate image data on the basis of the detection data of the radiation temperature sensor 9 received from the controller 1 through the reception unit 16. The image data is displayed on the display unit 20 in the form of the grid square map shown in Fig. 2. The image data represents the temperature distribution in the space to be air-conditioned. In Fig. 2, the higher the temperature is, the darker the shade is. The terminal 8 includes the memory 21, in which a plurality of pieces of image data can be stored. The data generation unit 19 is also configured to sort out the plurality of pieces of image data generated from the detection data according to the order of receipt from the controller 1. Accordingly, the grid square map representing the image data generated by the data generation unit 19 can be displayed on the display unit 20 on a time series basis. The time-series display may be in a form of a list, or in a form of slide-show.

The grid square map generated by the data generation unit 19 can be displayed on the display unit 20. Therefore, the service person can recognize, in view of the terminal 8, the temperature distribution in the space to be air-conditioned.

Here, the operation control unit 10 and the determination unit 11 may be constituted of a control device. The change detection unit 18 and the data generation unit 19 may also be constituted of a control device. The control device may be constituted of, for example, dedicated hardware, or a central processing unit (CPU), also called, an arithmetic unit, a microprocessor, a processor, or a microcomputer, which executes a program stored in a memory.

Examples of the dedicated hardware serving as the controller include a single circuit, a composite circuit, an application specific integrated circuit (ASIC), a field-programmable gate array (FPGA), and a combination thereof. Each of the functional units of the control device may be realized by individual hardware, or the functional units may be realized by a single piece of hardware.

In the case of the CPU, the functions to be performed by the control device are realized by software, firmware, or a combination of the software and the firmware. The software and the firmware are described as a program and stored in a memory. The CPU realizes the functions of the control device by reading out and executing the program stored in the memory. Examples of the memory include a volatile or nonvolatile semiconductor memory, such as a RAM, a ROM, a flash memory, an EPROM, or an EEPROM. Here, a part of the functions of the control device may be realized by the dedicated hardware, and another part may be realized by the software or the firmware.

### [Operation]

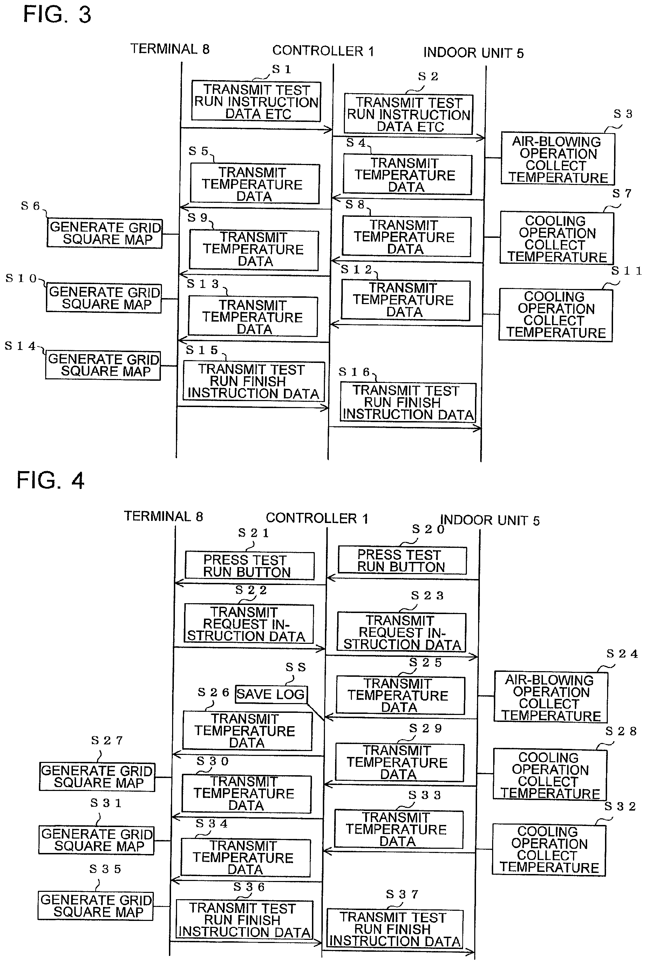

Fig. 3 is a sequence chart showing an operation of the air-conditioning system 500 according to Embodiment.

The terminal 8 transmits request instruction data for the detection data and test run instruction data to the controller 1 (S1).

The controller 1 transmits the request instruction data and the test run instruction data received from the terminal 8, to the indoor unit 5 (S2).

The operation control unit 10 controls the corresponding actuators according to the test run instruction data (S3). For example, the air-conditioning apparatus 100 activates the indoor fan 53A to perform the air-sending operation. The operation control unit 10 also controls the motor of the radiation temperature sensor 9, according to the request instruction data. For example, the radiation temperature sensor 9 is made to rotate 360 degrees. The radiation temperature sensor 9 acquires the detection data from the range of 360 degrees.

Since the request instruction data is received, the indoor unit 5 transmits the detection data to the controller 1, (S4).

The controller 1 transmits the detection data received from the indoor unit 5, to the terminal 8 (S5).

The data generation unit 19 of the terminal 8 generates the image data (S6).

The indoor unit 5, which received the test run instruction data at S2, performs the cooling operation following the air-sending operation (S7). The target temperature of the cooling operation may be set, for example, to 25 degrees Celsius. The indoor unit 5, which also received the request instruction data at S2, causes the radiation temperature sensor 9 to rotate by 360 degrees. Accordingly, the radiation temperature sensor 9 acquires the detection data from the range of 360 degrees.

Since the indoor unit 5 already received the request instruction data, the indoor unit 5 transmits the detection data to the controller 1 (S8).

The controller 1 transmits the detection data received from the indoor unit 5, to the terminal 8 (S9).

The data generation unit 19 of the terminal 8 generates the image data (S6).

The indoor unit 5 received the test run instruction data at S2, performs the heating operation following the cooling operation (S11). The target temperature of the heating operation may be set, for example, to 25 degrees Celsius. The indoor unit 5, which also received the request instruction data at S2, causes the radiation temperature sensor 9 to rotate 360 degrees. Accordingly, the radiation temperature sensor 9 acquires the detection data from the range of 360 degrees.

Since the indoor unit 5 already received the request instruction data, the indoor unit 5 transmits the detection data to the controller 1 (S12).

The controller 1 transmits the detection data received from the indoor unit 5, to the terminal 8 (S13).

The data generation unit 19 of the terminal 8 generates the image data (S14).

Upon completing the acquisition of the detection data from the test run of the air-conditioning apparatus 100, the terminal 8 transmits operation finish instruction data to the controller 1 (S15).

The controller 1 transmits the operation finish instruction data received from the terminal 8, to the indoor unit 5 (S16).

As described above, the controller 1 sequentially transmits the detection data (array data) received from the indoor unit 5, to the terminal 8. Here, the control process, through which the test run switch SW is turned on and the detection data acquired before the test run switch SW was turned on is transmitted to the controller 1, is omitted from Fig. 3. For example, the indoor unit 5 may transmit, before S3, the detection data already received before the test run switch SW was turned on to the controller 1, and the controller 1 may transmit the same detection data to the terminal 8.

The change detection unit 18 of the terminal 8 compares the detection data which has been sequentially acquired, to detect whether there has been a change.

According to the invention, the change detection unit 18 can detect that the air-conditioning apparatus 100 is not properly operating, when the change is larger than a predetermined value. The detection result of the change detection unit 18 is, for example, displayed on the display unit 20, and transmitted to the service store 90.

The terminal 8 converts the array data into the image data, and displays the image data on the display unit 20. The service person can visually confirm the transition of the radiation temperature in the space to be air-conditioned by viewing the slide show of the displayed image. Thus, the service person can confirm the transition of the radiation temperature not only from the detection result of the change detection unit 18, but also by viewing the grid square map on the display unit 20.

Using the terminal 8, for example a smartphone, instead of the controller 1 alleviates the restriction on the operation speed of the CPU, memory capacity, and so forth. That is, the display of the image data and the analysis of the detection data can be performed at a higher speed, and the storage capacity of the image data and the detection data can be increased.

Here, the value obtained by dividing the data amount of the radiation temperature sensor 9 by the data acquisition interval is set to a sufficiently smaller value than the communication rate between the indoor unit 5 and the controller 1, as well as between the controller 1 and the terminal 8.

### [Advantageous Effects of Embodiment]

It has thus far been difficult to recognize such situations that a part of the space to be air-conditioned is not sufficiently cooled or heated, and that the temperature distribution in the space to be air-conditioned is uneven. The phenomenon that a part of the space to be air-conditioned is not sufficiently cooled may originate from defective installation work of the air-conditioning apparatus, or insufficient capacity of the air-conditioning apparatus.

The terminal 8 of the air-conditioning system 500 detects the change between the detection data before the test run and the detection data after the test run, and outputs the change. The test run may be performed, for example, at the time of repair, inspection, installation, or replacement of the air-conditioning apparatus 100. With the air-conditioning system 500, therefore, such malfunctions that a part of the space to be air-conditioned is not sufficiently cooled or heated, and that the temperature distribution in the space to be air-conditioned is uneven can be notified to the service person through the output (display or sound) from the terminal 8. In the case where the terminal 8 outputs a display, the terminal 8 displays the region in the space to be air-conditioned that is insufficiently cooled.

Although the air-conditioning apparatus 100 normally performs through the test run, after the repair, inspection, installation, or replacement of the air-conditioning apparatus 100, actually the foregoing malfunctions may take place owing to the defective installation work of the air-conditioning apparatus 100, or insufficient capacity thereof. The air-conditioning system 500 allows such malfunctions to be outputted from the terminal 8 thus to be notified to the service person. Accordingly, the service person carrying the terminal 8 can easily recognize whether it is necessary to perform further repair or inspection, or whether the air-conditioning apparatus 100 has to be replaced because of insufficient capacity. In addition, the service store also acquires the radiation temperature data transmitted from the terminal 8, and hence can easily recognize whether it is necessary to perform further repair or inspection. Thus, the air-conditioning system 500 according to Embodiment enables more precise decision to be made regarding whether the air-conditioning apparatus 100 has to undergo a repair, an inspection, or replacement.

### [Modification]

Fig. 4 is a sequence chart showing a modification of the operation of the air-conditioning system 500 according to Embodiment.

In Embodiment, the test run instruction data from the terminal 8 serves as a trigger for starting the test run, however in the variation of Embodiment the test run switch SW provided on the indoor unit 5 serves as the trigger for starting the test run.

In this modification, the indoor unit 5 includes the test run switch SW for causing the air-conditioning apparatus 100 to perform the test run. When the test run switch SW is turned on, the indoor unit 5 transmits the detection data acquired before the test run switch SW was turned on, to the controller 1.

The indoor unit 5 also transmits the detection data acquired after the test run was started to the controller 1, when a predetermined time has elapsed after the start of the test run. The terminal 8 detects the change between the detection data acquired before the test run switch SW was turned on and the detection data acquired after the start of the test run, and outputs the change. Conventional air-conditioning apparatuses are not configured to transmit the data from the indoor unit to the controller when the test run switch is turned on. This is because it suffices for the service person to visually confirm that predetermined operations, for example the operation of the indoor fan, are normally performed, after the test run switch is turned on. In this variation, in contrast, the detection data is transmitted from the indoor unit 5 to the controller 1, so that the detection data is transmitted to the terminal 8 for confirmation therewith of whether the foregoing malfunctions are observed.

When the test run switch SW of the indoor unit 5 is pressed, the indoor unit 5 transmits switch-on data to the controller 1 (S20).

The controller 1 transmits the switch-on data received from the indoor unit 5 to the terminal 8 (S21).

Upon receipt of the switch-on data, the terminal 8 transmits the request instruction data for the detection data to the controller 1 (S22).

The controller 1 transmits the request instruction data received from the terminal 8 to the indoor unit 5 (S23).

The terminal 8 is exempted from transmitting the test run instruction data at S22 and S23, because the air-conditioning apparatus 100 can recognize that the test run instruction has been issued, when the test run switch SW is pressed.

The operations from S24 to S37 in Fig. 4 are the same as those from S3 to S16 in Fig. 3, and hence the description will not be repeated.

The controller 1 may keep periodical logs, irrespective of whether the controller 1 is connected to the terminal 8. In other words, the controller 1 may periodically acquire the detection data from the indoor unit 5 during the test run of the air-conditioning apparatus 100, and store the detection data.

The mentioned log keeping is represented by SS in Fig. 4. It may be optionally determined whether to perform the process of SS. The log keeping may be performed between S29 and S30, or between S33 and S34.

The log may be stored together with the control status of the air-conditioning operation, and may include the detection data itself from the radiation temperature sensor 9, or statistical values of the radiation temperature such as the average, maximum value, minimum value, and standard deviation. In the case of the latter, the data of a week or a month can be recorded provided that the controller 1 has a sufficient memory capacity, and the recorded data can be retrieved when the terminal 8 is connected.

In the case where the terminal 8 is not connected to the controller 1, the controller 1 may only store the status immediately after the test run and a latest status (statistical values of the radiation temperature, such as the average, maximum value, minimum value, and standard deviation), to thereby detect a change in radiation temperature during the test run, by calculating the differences.

The control process, through which the test run switch SW is turned on and the detection data acquired before the test run switch SW was turned on is transmitted to the controller 1, is omitted from Fig. 4. For example, the indoor unit 5 may transmit, before S24, the detection data already received before the test run switch SW was turned on to the controller 1, and the controller 1 may transmit the same detection data to the terminal 8.

### Reference Signs List

1: controller, 3: wiring, 5: indoor unit, 7: outdoor unit, 8: terminal, 9: radiation temperature sensor, 10: operation control unit, 11: determination unit, 12: reception unit, 13: transmission unit, 14: transmission unit, 15: reception unit, 16: reception unit, 17: transmission unit, 18: change detection unit, 19: data generation unit, 20: display unit, 21: memory, 22: determination unit, 23: memory, 51: compressor, 52: flow switching valve, 53: indoor heat exchanger, 53A: indoor fan, 54: expansion device, 55: outdoor heat exchanger, 55A: outdoor fan, 90: service store, 100: air-conditioning apparatus, 500: air-conditioning system, A: main controller, B: sub controller, C: sub controller, L1: wiring, L2: wireless communication, L3: wiring, Me: memory, SW: test run switch

## Claims

1. An air-conditioning system comprising:
an air-conditioning apparatus (100) including an outdoor unit (7) and an indoor unit (5) having a temperature sensor (9);
a controller (1) configured to communicate with the indoor unit (5) and acquire detection data from the temperature sensor (9); and
a terminal (8) configured to communicate with the controller (1) and acquire the detection data from the controller (1),
**characterized in that**
the temperature sensor (9) is a radiation temperature sensor configured to detect radiation temperature in a space to be air conditioned,
the terminal (8) is configured to output information on whether a change of the detection data is larger than a predetermined value, wherein
either the terminal (8) is configured to transmit a test run instruction to cause the air-conditioning apparatus (100) to perform a test run, and
the controller (1) is configured to
transmit to the terminal (8), when receiving the test run instruction, the detection data acquired in advance from the indoor unit (5) before the test run, and then cause the air-conditioning apparatus (100) to perform the test run,
acquire from the indoor unit (5), when the air-conditioning apparatus (100) performs the test run, the detection data after the test run is performed, and
transmit the detection data after the test run and acquired from the indoor unit (5) to the terminal (8),
wherein the terminal (8) is configured to detect a change between the detection data before the test run and the detection data after the test run is performed, and output the change;
or wherein the indoor unit (5)
includes a test run switch (SW) for causing the air-conditioning apparatus (100) to perform a test run,
is configured to transmit, when the test run switch (SW) is turned on, the detection data acquired before the test run switch (SW) is turned on, to the controller (1), and transmit to the controller (1), after the test run is started, the detection data acquired after the test run is started,
wherein the terminal (8) is configured to detect a change between the detection data acquired before the test run switch (SW) is turned on and the detection data acquired after the test run is started, and output the change.

2. The air-conditioning system of claim 1,
wherein the terminal (8) includes a display unit (20) configured to display image data, and
is configured to generate the image data representing distribution of the radiation temperature in the space to be air-conditioned according to the detection data acquired from the controller (1), and display the image data on the display unit (20).

3. The air-conditioning system of any one of claims 1 to 2,
wherein the controller (1) is configured to periodically acquire the detection data from the indoor unit (5) while the air-conditioning apparatus (100) is performing the test run, and store the detection data.

4. The air-conditioning system of any one of claims 1 to 3,
wherein the controller (1) is configured to store a plurality of pieces of the detection data, and transmit the stored detection data in response to a request from the terminal (8).

5. The air-conditioning system of any one of claims 1 to 4,
wherein the indoor unit (5) and the controller (1) are configured to communicate with each other by a first communication method, and
the controller (1) and the terminal (8) are configured to communicate with each other by a second communication method different from the first communication method.

6. The air-conditioning system of any one of claims 1 to 5,
wherein the indoor unit (5) and the controller (1) are connected to each other via a dedicated line for communication, and
the controller (1) and the terminal (8) are configured to communicate with each other by short-range wireless communication.

7. The air-conditioning system of any one of claims 1 to 6,
wherein the controller (1) is a remote controller (1) configured to control an operation of the indoor unit (5), and
the terminal (8) is a portable terminal (8).

## Patentansprüche

1. Klimatisierungssystem, welches aufweist:
ein Klimagerät (100) enthaltend eine Außeneinheit (7) und eine Inneneinheit (5) mit einem Temperatursensor (9);
eine Steuervorrichtung (1), die konfiguriert ist zum Kommunizieren mit der Inneneinheit (5) und zum Erwerben von Erfassungsdaten von dem Temperatursensor (9); und
ein Endgerät (8), das konfiguriert ist zum Kommunizieren mit der Steuervorrichtung (1) und zum Erwerben der Erfassungsdaten von der Steuervorrichtung (1),
**dadurch gekennzeichnet, dass**
der Temperatursensor (9) ein Strahlungstemperatursensor ist, der zum Erfassen der Strahlungstemperatur in einem zu klimatisierenden Raum konfiguriert ist,
das Endgerät (8) zum Ausgeben von Informationen darüber, ob eine Änderung der Erfassungsdaten größer als ein vorbestimmter Wert ist, konfiguriert ist, wobei
das Endgerät (8) konfiguriert ist zum Senden eines Testlaufbefehls zum Bewirken, dass das Klimagerät (100) einen Testlauf durchführt, und die Steuervorrichtung (1) konfiguriert ist zum Senden, wenn der Testlaufbefehl empfangen wird, der vorher von der Inneneinheit (5) erworbenen Erfassungsdaten vor dem Testlauf zu dem Endgerät (8), und dann zum Bewirken, dass das Klimagerät (100) den Testlauf durchführt, Erwerben von der Inneneinheit (5), wenn das Klimagerät (100) den Testlauf durchführt, der Erfassungsdaten, nachdem der Testlauf durchgeführt wurde, und
Senden der von der Inneneinheit (5) erworbenen Erfassungsdaten nach dem Testlauf zu dem Endgerät (8),
wobei das Endgerät (8) konfiguriert ist zum Erfassen einer Änderung zwischen den Erfassungsdaten vor dem Testlauf und der Erfassungsdaten nach der Durchführung des Testlaufs, und zum Ausgeben der Änderung;
oder
wobei die Inneneinheit (5)
einen Testlaufschalter (SW) zum Bewirken, dass das Klimagerät (100) einen Testlauf durchführt, enthält,
konfiguriert ist zum Senden, wenn der Testlaufschalter (SW) eingeschaltet ist, der Erfassungsdaten, die vor dem Einschalten des Testlaufschalters (SW) erworben wurden, zu der Steuervorrichtung (1), und Senden, nachdem der Testlauf gestartet wurde, der nach dem Starten des Testlaufs erworbenen Erfassungsdaten zu der Steuervorrichtung (1),
wobei das Endgerät (8) konfiguriert ist zum Erfassen einer Änderung zwischen den vor dem Einschalten des Testlaufschalters (SW) erworbenen Erfassungsdaten und den nach dem Starten des Testlaufs erworbenen Erfassungsdaten, und zum Ausgeben der Änderung.

2. Klimatisierungssystem nach Anspruch 1,
bei dem das Endgerät (8) eine Anzeigeeinheit (20) enthält, die zum Anzeigen von Bilddaten konfiguriert ist, und
konfiguriert ist zum Erzeugen der Bilddaten, die die Verteilung der Strahlungstemperatur in dem zu klimatisierenden Raum darstellen, gemäß den von der Steuervorrichtung (1) erworbenen Erfassungsdaten, und zum Anzeigen der Bilddaten auf der Anzeigeeinheit (20).

3. Klimatisierungssystem nach einem der Ansprüche 1 bis 2,
bei dem die Steuervorrichtung (1) konfiguriert ist zum periodischen Erwerben der Erfassungsdaten von der Inneneinheit (5), während das Klimagerät (100) den Testlauf durchführt, und zum Speichern der Erfassungsdaten.

4. Klimatisierungssystem nach einem der Ansprüche 1 bis 3,
bei dem die Steuervorrichtung (1) konfiguriert ist zum Speichern mehrerer Stücke der Erfassungsdaten, und zum Senden der gespeicherten Erfassungsdaten als Antwort auf eine Anforderung von dem Endgerät (8).

5. Klimatisierungssystem nach einem der Ansprüche 1 bis 4,
bei dem die Inneneinheit (5) und die Steuervorrichtung (1) konfiguriert sind zum Kommunizieren miteinander mittels eines ersten Kommunikationsverfahrens, und
die Steuervorrichtung (1) und das Endgerät (8) konfiguriert sind zum Kommunizieren miteinander mittels eines zweiten Kommunikationsverfahrens, das von dem ersten Kommunikationsverfahren verschieden ist.

6. Klimatisierungssystem nach einem der Ansprüche 1 bis 5,
bei dem die Inneneinheit (5) und die Steuervorrichtung (1) über eine dedizierte Leitung für die Kommunikation miteinander verbunden sind, und
die Steuervorrichtung (1) und das Endgerät (8) konfiguriert sind zum Kommunizieren miteinander durch eine Nahbereichs-Funkkommunikation.

7. Klimatisierungssystem nach einem der Ansprüche 1 bis 6,
bei dem die Steuervorrichtung (1) eine entfernte Steuervorrichtung (1) ist, die konfiguriert ist zum Steuern einer Operation der Inneneinheit (5), und
das Endgerät (8) ein tragbares Endgerät (8) ist.

## Revendications

1. Système de climatisation comprenant :
un appareil de climatisation (100) qui comprend une unité d'extérieur (7) et une unité d'intérieur (5) ayant un capteur de température (9) ;
un contrôleur (1) configuré pour communiquer avec l'unité d'intérieur (5) et pour acquérir des données de détection auprès du capteur de température (9) ; et
un terminal (8) configuré pour communiquer avec le contrôleur (1) et pour acquérir les données de détection auprès du contrôleur (1),
**caractérisé en ce que**
le capteur de température (9) est un capteur de température de rayonnement configuré pour détecter la température de rayonnement dans un espace à climatiser,
le terminal (8) est configuré pour délivrer des informations sur le fait qu'un changement des données de détection soit supérieur ou non à une valeur prédéterminée,
dans lequel
le terminal (8) est configuré pour transmettre une instruction d'exécution de test de sorte que l'appareil de climatisation (100) effectue un test, et
le contrôleur (1) est configuré pour transmettre au terminal (8),
lorsqu'il reçoit l'instruction d'exécution de test, les données de détection acquises à l'avance auprès de l'unité d'intérieur (5) avant le test, puis pour faire en sorte que l'appareil de climatisation (100) exécute le test,
pour acquérir auprès de l'unité d'intérieur (5), lorsque l'appareil de climatisation (100) exécute le test, les données de détection après que le test a été exécuté, et
pour transmettre les données de détection après le test et acquises auprès de l'unité d'intérieur (5) au terminal (8),
le terminal (8) étant configuré pour détecter un changement entre les données de détection avant le test et les données de détection après le test, et pour délivrer le changement ;
ou
dans lequel l'unité d'intérieur (5)
comprend un bouton de lancement de test (SW) destiné à permettre à l'appareil de climatisation (100) d'exécuter un test,
est configurée pour transmettre, lorsque le bouton de lancement de test (SW) est activé, les données de détection acquises avant que le bouton de lancement de test (SW) ait été activé, au contrôleur (1), et pour transmettre au contrôleur (1), après le lancement du test, les données de détection acquises après le lancement du test,
le terminal (8) étant configuré pour détecter un changement entre les données de détection acquises avant que le bouton de lancement de test (SW) ait été activé et les données de détection acquises après le lancement du test, et pour délivrer le changement.

2. Système de climatisation selon la revendication 1,
dans lequel le terminal (8) comprend une unité d'affichage (20) configurée pour afficher des données d'image, et
est configuré pour générer les données d'image qui représentent la répartition de la température de rayonnement dans l'espace à climatiser selon les données de détection acquises auprès du contrôleur (1), et pour afficher les données d'image sur l'unité d'affichage (20).

3. Système de climatisation selon l'une quelconque des revendications 1 à 2,
dans lequel le contrôleur (1) est configuré pour acquérir périodiquement les données de détection auprès de l'unité d'intérieur (5) pendant que l'appareil de climatisation (100) exécute le test, et pour stocker les données de détection.

4. Système de climatisation selon l'une quelconque des revendications 1 à 3,
dans lequel le contrôleur (1) est configuré pour stocker une pluralité d'éléments des données de détection, et pour transmettre les données de détection stockées en réponse à une demande du terminal (8).

5. Système de climatisation selon l'une quelconque des revendications 1 à 4,
dans lequel l'unité d'intérieur (5) et le contrôleur (1) sont configurés pour communiquer l'un avec l'autre par un premier procédé de communication, et
le contrôleur (1) et le terminal (8) sont configurés pour communiquer l'un avec l'autre par un second procédé de communication différent du premier procédé de communication.

6. Système de climatisation selon l'une quelconque des revendications 1 à 5,
dans lequel l'unité d'intérieur (5) et le contrôleur (1) sont reliés l'un à l'autre via une ligne de communication dédiée, et
le contrôleur (1) et le terminal (8) sont configurés pour communiquer l'un avec l'autre par une communication sans fil de courte portée.

7. Système de climatisation selon l'une quelconque des revendications 1 à 6,
dans lequel le contrôleur (1) est une télécommande (1) configurée pour contrôler une opération de l'unité d'intérieur (5), et
le terminal (8) est un terminal portable (8).
